# EUROPEAN PATENT APPLICATION

(11) **EP 4 631 617 A1**
(43) Date of publication of application: **15.10.2025**
(21) Application number: 23900956.6
(22) Date of filing: 21.11.2023
(51) Int. Cl.: B01J 23/00, B01J 21/10, B01J 21/02, B01J 23/46, B01J 35/00, B01J 37/08, C01B 3/04

(54) **AMMONIA DECOMPOSING CATALYST AND METHOD FOR PRODUCING SAME**

(30) Priority: 05.12.2022 KR 20220167692
(71) Applicant: POSCO Holdings Inc., Pohang-si, Gyeongsangbuk-do 37859 (KR); RESEARCH INSTITUTE OF INDUSTRIAL SCIENCE & TECHNOLOGY, Pohang-si, Gyeongsangbuk-do 37673 (KR)
(72) Inventor: RHEE, Chang-Houn, Pohang-si, Gyeongsangbuk-do 37673 (KR); SOHN, Hyun-Tae, Seoul 02792 (KR); KIM, Yong-Min, Seoul 02792 (KR); JEONG, Hyang-Soo, Seoul 02792 (KR); NAM, Suk-Woo, Seoul 02792 (KR); PARK, Hai-Woong, Ulsan 44658 (KR); KIM, Beom-Sik, Pohang-si, Gyeongsangbuk-do 37673 (KR); KWON, Gi-Hun, Pohang-si, Gyeongsangbuk-do 37685 (KR); JOO, Sang-Wook, Pohang-si, Gyeongsangbuk-do 37680 (KR); YOON, Chang-Won, Seoul 01791 (KR); KIM, Jin-Su, Seoul 02792 (KR)
(74) Representative: Pfenning, Meinig & Partner mbB
(86) International application number: PCT/KR2023/018802
(87) International publication number: WO 2024/122937

(57) **Abstract**

The present invention pertains to an ammonia decomposing catalyst and a method for producing same. More specifically, the present invention pertains to: an ammonia decomposing catalyst containing an MgAl₂O₄ spinel support and ruthenium, the content of ruthenium being 0.1-5 wt% of the total weight of the catalyst; and a method for producing same.

## Description

### Technical Field

The present disclosure relates to an ammonia decomposing catalyst and a method for producing the same, and more specifically, to a catalyst utilizing a spinel support obtained through a heat treatment of a precursor having a hydrotalcite structure and a method for producing the same.

### Background Art

To ameliorate the effects of climate change and various environmental pollution problems, efforts are being made worldwide to reestablish a carbon-based energy society into a renewable energy-based energy society. However, since the distribution of renewable energy is biased by region and time, in order to use renewable energy universally, a trading system between countries or continents should be established using an energy storage system for storing large amount of renewable energy.

Hydrogen is a substance that can be stored in large quantities and for a long period of time, and many countries, including some within Europe, as well as Japan, Saudi Arabia, and Australia, are trying to establish a global renewable energy trading system using hydrogen as a renewable energy storage medium. Meanwhile, according to the Korean government's hydrogen economy activation roadmap, the government has set a goal of increasing domestic hydrogen supply. However, since hydrogen has a very low energy density per volume, research into chemical and physical hydrogen storage methods is essential in order to economically import large quantities of hydrogen from overseas. To this end, various hydrogen storage materials such as ammonia (NH₃), liquid organic hydrogen compounds (LOHCs), liquefied hydrogen (LH₂), and the like are being actively studied. In particular, ammonia is attracting attention as a hydrogen (renewable energy) storage medium with high commercial feasibility due to a high hydrogen storage capacity (17.6 wt%, 108 g/L) thereof, ease of storage (8.74 Kpa, 20°C), and ability to utilize the existing ammonia storage and transportation infrastructure.

One ammonia molecule is comprised of three hydrogen atoms and one nitrogen atom, and when the ammonia molecule is decomposed at high temperatures, only hydrogen and nitrogen gas, which makes up 78% of air, are produced. Ammonia has the advantage that existing infrastructure can be used for large-scale storage and long-distance transportation, and ammonia may also minimize carbon dioxide emissions because only hydrogen and nitrogen are produced in addition to the advantage described above.

However, the biggest problem is that since an ammonia decomposition reaction itself proceeds at high temperature and pressure, a considerable amount of heat should be supplied to heat a reactor. The ammonia decomposition reaction is a reaction in which two ammonia molecules are decomposed into one nitrogen molecule and three hydrogen molecules, as shown in the following reaction equation, which is an endothermic reaction and requires approximately 46 kJ/mol of heat.

2NH₃(g) -> N₂(g) + 3H₂(g)

A thermodynamic ammonia conversion rate is 99.1% at 400°C and 1 atm, but in reality, it is operated at a reaction temperature of 550°C or higher due to a reaction kinetic energy barrier. Therefore, if a solid powder-type catalyst is used together during the reaction, the reaction temperature may be significantly lowered. Meanwhile, as disclosed in Japanese Patent Application No. 2015-080470, for example, a commonly used ruthenium noble metal-based catalyst has high ammonia decomposition activity but is significantly expensive, which is not desirable from a perspective of process economics. There is a need for the development of an economical ruthenium catalyst that has a low ruthenium content and exhibits high activity and high durability at a temperature lower than the existing reaction temperature.

In particular, in order to efficiently proceed with an ammonia dehydrogenation reaction, nitrogen recombination, which is a reaction rate determining operation, should be promoted, and to this end, appropriate metal-nitrogen binding energy is required. The size of ruthenium metal also affects a degree of reaction activity, so it is also necessary to develop technology to obtain the size of ruthenium that exhibits the highest level of activity in the ammonia dehydrogenation reaction.

### Summary of Invention

### Technical Problem

An aspect of the present disclosure is to provide an ammonia decomposing catalyst having excellent ammonia decomposition and hydrogen production capability and high activity and durability.

Another aspect of the present disclosure is to provide a method for producing a catalyst having the above-described characteristics.

Another aspect of the present disclosure is to provide a method for decomposing ammonia using the catalyst of the present disclosure.

### Solution to Problem

According to an aspect of the present disclosure, provided is an ammonia decomposing catalyst, the ammonia decomposing catalyst including: a MgAl₂O₄ spinel support and ruthenium, wherein the ruthenium is contained in an amount of 0.1 to 5 wt% based on a total weight of the catalyst.

According to another aspect of the present disclosure, provided is a method for producing an ammonia decomposing catalyst, the method including: performing a first heat treatment of heat treating a precursor mixture including magnesium oxide and aluminum oxide having a hydrotalcite structure to obtain a MgAl₂O₄ spinel support; producing a mixture obtained by mixing the spinel support and a ruthenium precursor aqueous solution; and performing a second heat treatment after drying the mixture.

According to another aspect of the present disclosure, provided is a method for decomposing ammonia, the method including: treating ammonia at a reaction temperature within a range of 300 to 700°C under conditions of a GHSV of 10,000 to 30,000 mL g_{cat}⁻¹ h⁻¹, using the ammonia decomposing catalyst of the present disclosure.

### Advantageous Effects of Invention

As set forth above, according to the present disclosure, an ammonia decomposing catalyst has excellent hydrogen production capability at a temperature of 550°C or lower, and high catalytic activity and durability. An ammonia decomposing catalyst according to an embodiment of the present disclosure may minimize ammonia decomposition efficiency by optimizing an interaction between metal and a support, and may exhibit a higher level of stability and activity with a smaller ruthenium content at the same reaction temperature and gas space velocity, as compared to the conventional ammonia decomposing catalysts.

### Brief description of drawings

FIG. 1 is a graph illustrating XRD evaluation results of a mixture of alumina and magnesia as a precursor of a catalyst support for an ammonia dehydrogenation reaction according to an embodiment of the present disclosure.
FIG. 2 is a graph illustrating XRD evaluation results of a MgAl₂O₄ material having a spinel structure of a support synthesized according to an embodiment of the present disclosure.
FIG. 3 is a graph illustrating XRD evaluation results according to a change in a support in a catalyst for an ammonia dehydrogenation reaction according to an embodiment of the present disclosure.
FIG. 4 is a graph illustrating the results of evaluating ammonia decomposition efficiency according to a change in a support in an ammonia decomposition reaction of a catalyst for an ammonia dehydrogenation reaction according to an embodiment of the present disclosure.
FIG. 5A is a TEM analysis photograph of a catalyst for an ammonia dehydrogenation reaction according to an embodiment of the present disclosure, and FIG. 5B is a graph illustrating a distribution of particle sizes, and an average particle size thereof was measured to be 2.54 nm.
FIG. 6 is a graph illustrating the results of evaluating ammonia decomposition performance according to a ruthenium content in a catalyst for an ammonia dehydrogenation reaction according to an embodiment of the present disclosure.
FIG. 7 is a graph illustrating the results of evaluating ammonia decomposition performance according to a change in atmosphere conditions of heat treatment (second heat treatment) when supporting ruthenium with a catalyst for an ammonia dehydrogenation reaction according to an embodiment of the present disclosure.

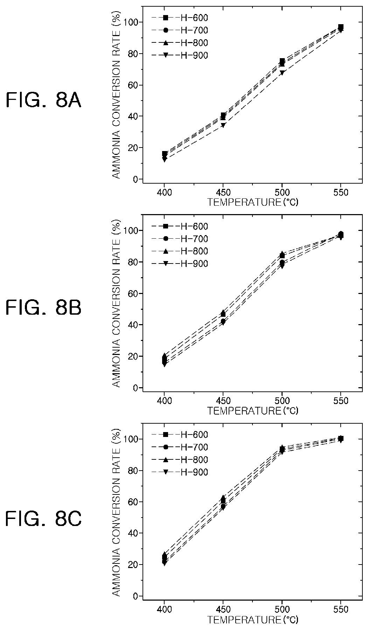

FIG. 8 is a graph illustrating the results of evaluating ammonia decomposition performance according to a change in heat treatment (first heat treatment) temperatures during producing a support in a catalyst for an ammonia dehydrogenation reaction according to an embodiment of the present disclosure. FIG. 8A is a graph illustrating the results when the conditions of GHSV=30,000 mL g_{cat}⁻¹ h⁻¹ is applied, FIG. 8B is a graph illustrating the results when the conditions of GHSV=20,000 mL g_{cat}⁻¹ h⁻¹ is applied, FIG. 8C is a graph illustrating the results when the conditions of GHSV=10,000 mL g_{cat}⁻¹ h⁻¹ is applied.
FIG. 9 is a graph illustrating the results of evaluating ammonia decomposition performance according to a change in second heat treatment temperature conditions in a catalyst for an ammonia dehydrogenation reaction according to an embodiment of the present disclosure. FIG. 9A is a graph illustrating the results when the conditions of GHSV=30,000 mL g_{cat}⁻¹ h⁻¹ is applied, FIG. 9B is a graph illustrating the results when the conditions of GHSV=20,000 mL g_{cat}⁻¹ h⁻¹ is applied, and FIG. 9C is a graph illustrating the results when the conditions of GHSV=10,000 mL g_{cat}⁻¹ h⁻¹ is applied.

### Best Mode for Invention

Hereinafter, preferred embodiments of the present disclosure will be described with reference to the attached drawings. However, the embodiments of the present disclosure may be modified to have various other forms, and the scope of the present disclosure is not limited to the embodiments described below.

According to the present invention, provided is an ammonia decomposing catalyst for producing high-purity hydrogen at a temperature of 550°C or lower. The catalyst of the present disclosure is a ruthenium-based ammonia decomposing catalyst having the highest level of catalytic activity and durability.

More specifically, the ammonia decomposing catalyst of the present disclosure includes a MgAl₂O₄ spinel support and ruthenium, wherein the ruthenium is contained in an amount of 0.1 to 5 wt% based on a total weight of the catalyst, for example, 1 to 4 wt%, or 1 to 3 wt%, preferably 1 to 2 wt%. When the ruthenium is contained in an amount of less than 0.1 wt%, the catalytic activity may be insufficient, and when the ruthenium is contained in an amount of exceeding 5 wt%, a ruthenium concentration on a surface of the catalyst increases, causing the ruthenium particles to clump together, which increases a particle size of the ruthenium and reduces the catalytic activity and durability. The ammonia decomposing catalyst of the present disclosure may exhibit excellent catalytic activity even when used in a relatively small amount thereof.

The ruthenium included in the catalyst of the present disclosure has an average particle size of 2 to 5 nm, for example, 2 to 3 nm, and therefore can exhibit excellent activity in the ammonia dehydrogenation reaction.

Thus, according to the present disclosure, a catalyst for an ammonia decomposition reaction exhibiting a high specific surface area, basicity and homogeneity through the introduction of MgAl₂O₄ as a support, and supporting ruthenium having a particle size of 2 to 5 nm exhibiting the highest level of activity in the ammonia decomposition reaction, is provided.

The catalyst may be prepared using a precursor mixture including magnesium oxide and aluminum oxide having a hydrotalcite structure, and more specifically, the catalyst may be prepared by performing a first heat treatment of heat treating a precursor mixture including magnesium oxide and aluminum oxide having a hydrotalcite structure to obtain a MgAl₂O₄ spinel support; preparing a mixture obtained by mixing the spinel support and a ruthenium precursor aqueous solution; and
performing a second heat treatment after drying the mixture.

According to the present disclosure, it is possible to synthesize an ammonia decomposing catalyst, that can increase the basicity of the catalyst by using MgAl₂O₄, having a spinel structure in which magnesia is chemically bonded to alumina (Al₂O₃) having high acidity, and thus enhance the interaction between the metal and the support.

The ruthenium precursor that can be used in the present disclosure may be at least one selected from the group consisting of ruthenium chloride (RuCl₃), ruthenium acetylate (Ru(C₅H₇O₂)₃), ruthenium oxide (RuO₂), and hydrates thereof, and ruthenium (III) chloride hydrate may be preferably used.

In this case, the precursor mixture may contain magnesia (MgO) in an amount of 10 to 40 wt% based on a total weight of the precursor mixture, for example, 20 to 30 wt%. When the magnesia (MgO) content is less than 10 wt% or is more than 40 wt%, the catalytic activity tends to decrease.

In an operation of performing a first heat treatment of heat treating the precursor mixture to obtain a MgAl₂O₄ spinel support, the first heat treatment may be performed at a temperature within a range of 500 to 900°C for 1 to 10 hours, for example, at a temperature within a range of 600 to 800°C for 4 to 8 hours. When the first heat treatment temperature and time are below or exceed the above-described ranges, the catalytic activity may be reduced.

In this case, the operation of performing the first heat treatment may be performed under an atmosphere of at least one reducing gas selected from the group consisting of hydrogen and nitrogen.

Meanwhile, the second heat treatment may be performed at a temperature within a range of 600 to 1000°C for 1 to 10 hours, for example, at a temperature within a range of 700 to 900°C for 4 to 8 hours. When the second heat treatment temperature and time are below or exceed the above-described ranges, the catalytic activity may be reduced.

In this case, the second heat treatment may be performed under an atmosphere of at least one gas selected from the group consisting of hydrogen and nitrogen, and preferably may be performed under an atmosphere of at least one reducing gas selected from the group consisting of hydrogen and nitrogen.

According to the present disclosure, a catalyst which can have a specific surface area of 50 to 200 m²/g, for example, 90 to 240 m²/g, and have an average pore diameter of 10 to 20 nm, for example, 12 to 16 nm, may be obtained. In addition, the ammonia decomposing catalyst according to the present disclosure has excellent hydrogen production capability at a temperature of 550°C or lower, and high catalytic activity and durability.

Furthermore, according to another aspect of the present disclosure, a method for decomposing ammonia is provided, the method including an operation of treating ammonia using an ammonia decomposing catalyst at a reaction temperature within a range of 300 to 700°C under conditions of a GHSV of 10,000 to 30,000 mL g_{cat}⁻¹ h⁻¹, wherein the reaction temperature may be, for example, 500 to 550 °C.

When using the ammonia decomposing catalyst according to the present disclosure, the ammonia decomposition efficiency may be maximized by optimizing the metal-support interaction, and, as compared to conventional ammonia decomposing catalysts, the ammonia decomposing catalyst may exhibit a higher level of stability and activity with a smaller ruthenium content at the same reaction temperature and gas space velocity.

### Mode for Invention

### Example

### 1. Preparation of ammonia decomposing catalyst

### Example

### Synthesis of support

A mixture of magnesium oxide and aluminum oxide (Sasol, MG30) having a hydrotalcite structure was used as a support precursor to synthesize the support by performing a heat treatment (first heat treatment) for 6 hours in an air atmosphere at a temperature of 600 to 900°C, and in this case, a temperature increase rate was 5°C/min.

Depending on a first heat treatment temperature, when a temperature applied to the support is 600°C, the support is referred to as MgAl₂O₄-600, when the temperature applied thereto is 700°C, the support is referred to as MgAl₂O₄-700, when the temperature applied thereto is 800°C, the support is referred to as MgAl₂O₄-800, and when the temperature applied thereto is 900°C, the support is referred to as MgAl₂O₄-900.

### (2) Support of ruthenium

Ruthenium (III) chloride hydrate is used as a ruthenium precursor to prepare an aqueous solution by dissolving the ruthenium precursor in 100 mL of water. The ruthenium precursor aqueous solution prepared using a rotary evaporator and the MgAl₂O₄-800 support obtained in operation (1) described above are stirred at room temperature. Thereafter, a bath temperature is increased to a temperature of 80°C, a pressure is set to 0.08 MPa, and stirred until the solution completely evaporates. A solid obtained therefrom was stored in a drying oven at a temperature of 100°C for 12 hours or more. The dried catalyst was subjected to a second heat treatment at a temperature of 800°C for 6 hours to obtain a Ru/MgAl₂O₄ catalyst.

A Ru/MgAl₂O₄ catalyst having ruthenium contents of 0.1, 0.2, 0.5, 1.0, 2.0, and 3.0 wt% was prepared, respectively, based on a total weight of the catalyst, according to the above-described ruthenium support process using the MgAl₂O₄-800 support.

In addition, a Ru/MgAl₂O₄ catalyst was prepared in H₂/N₂ mixture (hydrogen/nitrogen atmosphere), N₂ (nitrogen atmosphere), or air atmosphere according to the difference in second heat treatment atmospheres, according to the above-described ruthenium support process using the MgAl₂O₄-800 support.

Furthermore, MgAl₂O₄ samples (MgAl₂O₄-600, MgAl₂O₄-700, and MgAl₂O₄-900), subjected to a first heat treatment at different temperatures within ranges of 600 to 900°C as supports were used to prepare a Ru/MgAl₂O₄ catalyst.

### Comparative Example

### Comparative Example 1

A Ru/Al₂O₃ catalyst containing 3 wt% ruthenium based on a total weight of the catalyst was prepared according to operation 1.(2) described above using an Al₂O₃ support.

### Comparative Example 2

A Ru/MgO catalyst containing 3 wt% ruthenium based on a total weight of the catalyst was prepared according to operation 1.(2) described above using a MgO support.

### Comparative Example 3

A Ru/MgO+Al₂O₃ catalyst containing 3 wt% ruthenium based on a total weight of the catalyst was prepared according to operation 1.(2) described above using a MgOAl₂O₃ support in which MgO and Al₂O₃ were physically mixed in a 5:5 ratio.

### 2. Evaluation of Ammonia Decomposition Reaction Efficiency

After inserting 80 mg of each catalyst obtained in operation 1. described above into a reactor, ammonia decomposition efficiency was evaluated by injecting ammonia at temperatures of 550°C, 500°C, 450°C, and 400°C. After an ammonia decomposition reaction, a gas concentration was measured through gas chromatography, and the ammonia decomposition efficiency was calculated through the measured concentration.

### 3. Experimental Example

### Experimental Example 1: Confirmation of XRD Characteristics of Support Precursor

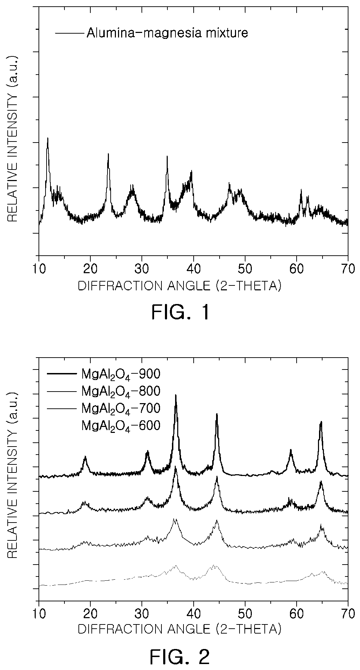

A material used as a support precursor was an alumina-magnesia mixture having a hydrotalcite structure, and in this case, magnesia (MgO) was included in an amount of 30 wt% based on a total weight of the mixture. The material was analyzed by XRD, and the result confirmed a pattern having a layered structure as shown in FIG. 1.

### Experimental Example 2: Confirmation of characteristics according to support heat treatment temperature

### 1) Confirmation of XRD characteristics

MgAl₂O₄ spinel was synthesized by performing a first heat treatment of the alumina-magnesia mixture having a hydrotalcite structure, which is a support precursor. XRD evaluation was performed to analyze the structural characteristics of a support material according to a change in the first heat treatment temperature, and the results thereof were shown in FIG. 2. The support was synthesized according to operation 1. (1) described above. It can be seen that as the first heat treatment temperature increases, the intensity of a diffraction peak related to MgAl₂O₄ due to the formation of the spinel structure increases.

### 2) Confirmation of surface area characteristics

In addition, BET evaluation was conducted to analyze the characteristics of a support pore structure according to the change in the first heat treatment temperature, and the results thereof were summarized in Table 1 below. In this case, the support was synthesized according to operation 1.(1) described above.

**[Table 1]**

| Support | Specific surface area (m2/g) | Average pore diameter (nm) |
|---|---|---|
| MgAl₂O₄-600 | 231.5 | 8.1 |
| MgAl₂O₄-700 | 181.8 | 12.3 |
| MgAl₂O₄-800 | 127.0 | 14.2 |
| MgAl₂O₄-900 | 94.9 | 15.8 |

Referring to Table 1 above, it can be seen that a specific surface area value of the support decreases as the first heat treatment temperature increases.

### Experimental Example 3: Characterization of Ruthenium-supported Catalyst

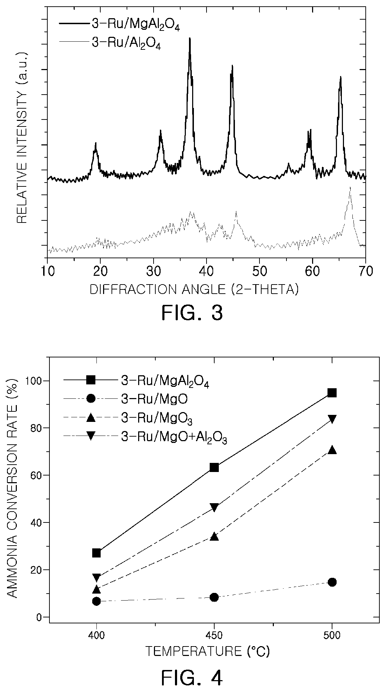

XRD analysis was performed to verify the material characteristics of Ru/MgAl₂O₄ and Ru/Al₂O₃ supported with 3 wt% ruthenium, and the results thereof were shown in FIG. 3. There was no peak formation due to ruthenium support, and only an XRD pattern corresponding to the support was recorded.

### Experimental Example 4: Confirmation of ammonia decomposition efficiency of ruthenium-supported catalyst

The ammonia decomposition efficiency of Ru/MgAl₂O₄, Ru/MgO, and Ru/Al₂O₃ supported with 3 wt% ruthenium and an Ru/MgO+Al₂O₃ catalyst supported with Ru in a physically mixed state (5:5 ratio) of MgO and Al₂O₃ supports and subjected to a second heat treatment at a high temperature of 800°C was compared. In this case, the ammonia decomposition efficiency reaction was performed under the following conditions.
- GHSV=10,000 mL g_{cat}⁻¹ h⁻¹
- Catalyst amount: 0.08 g
- Reaction temperature: 550°C, 500°C, 450°C, 400°C

After performing the ammonia dehydrogenation reaction, unreacted ammonia was analyzed using a gas chromatography device under the conditions described below, and an ammonia conversion rate was calculated thereby, and the results are shown in FIG. 4.
- GC-TCD
- Carrier gas: Helium
- Oven conditions: 40°C → 20°C/min → 120°C

It can be seen that, when utilizing the MgAl₂O₄ support as in the present disclosure, ammonia decomposition efficiency was recorded superior to that of other supports. This is due to the superiority of the MgAl₂O₄ spinel structure generated by utilizing a precursor of a hydrotalcite structure, and in particular, it was confirmed that the ammonia decomposition efficiency was significantly improved as compared to the catalyst that supported Ru metal with a physical mixture of Al₂O₃ and MgO supports, which is commonly used and was subjected to a second heat treatment at a high temperature of 800°C.

### Experimental Example 5: TEM Analysis of Ru/MgAl₂O₄ catalyst supported on ruthenium

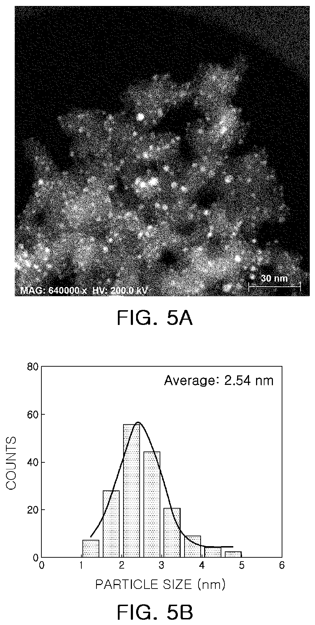

To determine the ruthenium dispersion characteristics of Ru/MgAl₂O₄ supported with 3 wt% ruthenium, TEM analysis was performed and the results are illustrated in FIG. 5. In the case of the catalyst prepared herein(, the support heat treatment (first heat treatment) temperature and the second heat treatment temperature were set to 800°C.

When ruthenium was supported using MgAl₂O₄ as a support, FIG. 5A is a TEM analysis photograph of a catalyst for an ammonia dehydrogenation reaction according to an embodiment of the present disclosure, and referring to FIG. 5B, it could be confirmed that the distribution of particle sizes of ruthenium particles was formed in the range of 1 to 5 nm, and the average particle size was measured to be 2.54 nm.

### Experimental Example 6: Confirmation of ammonia decomposition efficiency according to ruthenium content

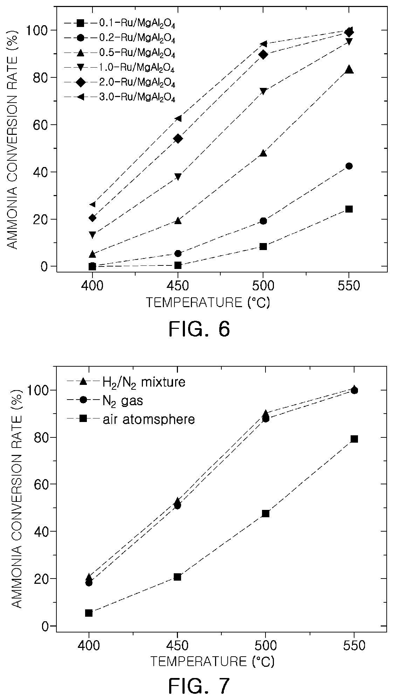

In order to determine the ammonia decomposition efficiency characteristics of MgAl₂O₄-based catalysts supported with 0.1 to 3 wt% ruthenium, an ammonia conversion rate was measured under the following conditions, and the results were illustrated in FIG. 6. The ammonia decomposition efficiency analysis of the catalyst was performed under the same conditions as in Experimental Example 4.

As the ruthenium content decreases, the ammonia decomposition efficiency decreases, but excellent ammonia decomposition efficiency was recorded at a temperature of 550°C even when a very small amount of ruthenium (0.1 wt%) was supported therewith.

### Experimental Example 7: Confirmation of ammonia decomposition efficiency according to changes in the second heat treatment atmosphere conditions

In order to determine the difference in ammonia decomposition efficiency characteristics according to changes in the second heat treatment atmosphere in a ruthenium-supported MgAl₂O₄-based catalyst, the second heat treatment was performed under hydrogen/nitrogen, nitrogen, and air atmosphere conditions, respectively. Analysis of ammonia decomposition efficiency of catalysts synthesized under different atmospheres was performed under the same conditions as Experimental Example 4. The results were illustrated in FIG. 7.

It was confirmed that the ammonia decomposition efficiency is different from each other depending on the change in the second heat treatment atmosphere conditions, and a sample having the second heat treatment performed in a reducing atmosphere exhibited the highest level of ammonia decomposition efficiency.

### Experimental Example 8: Confirmation of ammonia decomposition efficiency according to change in first heat treatment temperature during support synthesis

In order to determine the difference in ammonia decomposition efficiency characteristics according to changes in support heat treatment (first heat treatment) temperature conditions in a ruthenium-supported MgAl₂O₄-based catalyst, the first heat treatment temperature was changed from 600 to 900°C. Ammonia decomposing catalysts were synthesized using supports synthesized at different temperatures. The ammonia decomposition efficiency reaction was performed under the following conditions.
GHSV=10,000-30,000 mL g_{cat}⁻¹ h⁻¹
Catalyst amount: 0.08 g
Reaction temperature: 550°C, 500°C, 450°C, 400°C

After performing the ammonia dehydrogenation reaction, unreacted ammonia was analyzed using a gas chromatography device under the conditions described below, and an ammonia conversion rate was calculated thereby, and the results are illustrated in FIG. 8.
- GC-TCD
- Carrier gas: Helium
- Oven conditions: 40°C → 20°C/min → 120°C

It was confirmed that the prepared catalyst exhibited excellent ammonia decomposition efficiency even at GHSV=10,000-30,000 mL g_{cat}⁻¹ h⁻¹, and it was confirmed that the catalyst prepared using the support synthesized through the first heat treatment at a temperature 800°C exhibited the highest level of catalytic activity.

### Experimental Example 9: Confirmation of ammonia decomposition efficiency according to changes in second heat treatment temperature conditions

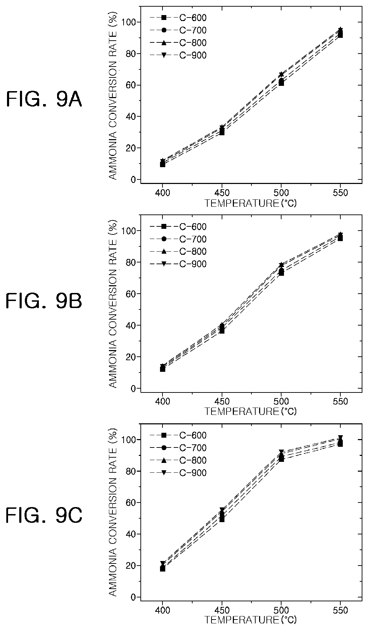

In order to determine the difference in ammonia decomposition efficiency characteristics according to changes in a second heat treatment temperature in a ruthenium-supported MgAl₂O₄-based catalyst, when the second heat treatment temperature changed from 600°C to 900°C, ammonia decomposition efficiency analysis was performed under the same conditions as in Experimental Example 8, and the results were shown in FIG. 9.

It was confirmed that the prepared catalyst exhibited excellent ammonia decomposition efficiency even at GHSV=10,000-30,000 mL g_{cat}⁻¹ h⁻¹, and it was confirmed that the catalyst having the second heat treatment process performed at a temperature 800°C exhibited the highest level of catalytic activity.

## Claims

1. An ammonia decomposing catalyst, comprising:
a MgAl₂O₄ spinel support and ruthenium,
wherein the ruthenium is contained in an amount of 0.1 to 5 wt% based on a total weight of the catalyst.

2. The ammonia decomposing catalyst of claim 1, wherein the ruthenium has an average particle size of 2 to 5 nm.

3. A method for producing an ammonia decomposing catalyst, comprising:
performing a first heat treatment of heat treating a precursor mixture having a hydrotalcite structure including magnesium oxide and aluminum oxide to obtain a MgAl₂O₄ spinel support;
producing a mixture obtained by mixing the spinel support and a ruthenium precursor aqueous solution; and
performing a second heat treatment after drying the mixture.

4. The method for producing an ammonia decomposing catalyst of claim 3, wherein the first heat treatment is performed at a temperature within a range of 500 to 900°C for 1 to 10 hours.

5. The method for producing an ammonia decomposing catalyst of claim 3, wherein the second heat treatment is performed at a temperature within a range of 600 to 1000°C for 1 to 10 hours.

6. The method for producing an ammonia decomposing catalyst of claim 3, wherein the second heat treatment is performed under at least one gas atmosphere selected from the group consisting of hydrogen and nitrogen.

7. A method for decomposing ammonia, comprising:
treating ammonia at a reaction temperature within a range of 300 to 700°C under conditions of a GHSV of 10,000 to 30,000 mL g_{cat}⁻¹ h⁻¹, using the ammonia decomposing catalyst of claim 1 or claim 2.
